# EUROPÄISCHE PATENTSCHRIFT

(11) **EP 1 665 198 B1**
(45) Veröffentlichungstag und Bekanntmachung des Hinweises auf die Patenterteilung: **27.02.2008**
(21) Anmeldenummer: 04762476.2
(22) Anmeldetag: 22.07.2004
(51) Int. Cl.: G08G 1/16, B60Q 1/52

(54) **VERFAHREN UND VORRICHTUNG ZUR AUSGABE EINER WARNUNG**
METHOD AND DEVICE FOR EMITTING WARNING
PROCEDE ET DISPOSITIF D'EMISSION D'UNE ALERTE

(30) Priorität: 16.09.2003 DE 10342705
(43) Veröffentlichungstag der Anmeldung: 07.06.2006
(73) Patentinhaber: ROBERT BOSCH GMBH, 70442 Stuttgart (DE)
(72) Erfinder: SCHROEDER, Carsten, 71272 Renningen (DE); PETSCHNIGG, Peter, 70469 Stuttgart (DE)
(86) Internationale Anmeldenummer: PCT/DE2004/001626
(87) Internationale Veröffentlichungsnummer: WO 2005/036498

(56) Entgegenhaltungen:
- EP-A- 1 035 455
- EP-A- 1 148 460
- US-A1- 2003 004 644
- US-A1- 2003 167 113

## Beschreibung

Die vorliegende Erfindung betrifft ein "Verfahren und eine Vorrichtung zum Ausgeben einer Warnung, insbesondere an einem ersten Kraftfahrzeug, das mit einer adaptiven Abstands- und Geschwindigkeitsregelung ausgestattet ist, wobei Mittel zur Erkennung eines Fahrzeugstillstands des ersten Fahrzeugs vorgesehen sind, sowie Mittel zur Ermittlung des Abstands und der Relativgeschwindigkeit eines zweiten Fahrzeugs vorgesehen sind, wodurch ein Zurückrollen eines zweiten Fahrzeugs, das sich unmittelbar vor dem ersten Fahrzeug befindet, erkennbar ist, während das erste Fahrzeug sich im Stillstand befindet. Bei Unterschreitung eines Mindestabstands zwischen dem ersten und dem zweiten Fahrzeug wird eine Warnung ausgegeben, um auf die drohende Fahrzeugkollision in Folge des Zurückrollens des zweiten Fahrzeugs hinzuweisen.

### Stand der Technik

Aus der Veröffentlichung "Adaptive Cruise Control System, Aspects and Development Trends" von Winner, Witte, Uhler und Lichtenberg, erschienen auf der SAE International Congress and Exposition, Detroit, 26.-29.02.1996, ist ein adaptiver Abstands- und Geschwindigkeitsregler bekannt, der mittels ausgesandter Radarwellen den Abstand und die Relativgeschwindigkeit eines vorherfahrenden Fahrzeugs misst und bezüglich einem erkannten, vorherfahrenden Fahrzeug eine Abstandsregelung durchführt. Erkennt der Radarsensor kein vorherfahrendes Fahrzeug, so wird eine Geschwindigkeitsregelung auf eine vom Fahrer vorgegebene Setzgeschwindigkeit durchgeführt. Diese adaptive Abstands- und Geschwindigkeitsregelung ist innerhalb vorgegebener Geschwindigkeitsgrenzen, beispielsweise zwischen 20 und 180 km/h aktivierbar.

Aus der US 2003/016 7113 ist ein Merkzweckfahrerassistenzsystem für ein Kraftfahrzeug bekannt, bei dem zwischen einer Einparkhilfebetriebsart und einer Precrash-Betriebsart gewechselt werden kann und wobei mittels eines Sensors die Entfernung des Fahrzeugs von einem Objekt erfasst wird und durch Auswertung charakteristischer Parameter erkannt wird, ob eine Umschaltung in den Einparkhilfemodul oder den Precrash-Modus vorgenommen werden soll. Weiterhin ist vorgesehen, dass die erfindungsgemäße Steuereinheit Funktionsgruppen des Kraftfahrzeugs in Abhängigkeit vom Erfassungsergebnis des Sensors ansteuern kann.

Aus der EP 1148 460 A2 ist ein Warnsystem zum Sichern einer temporären Straßenbaustelle bekannt, bei dem mindestens eine Fahrspur, die für den auflaufenden Verkehr nur durch ein Baufahrzeug mit einer Absperrtafel gesperrt wird, vorgesehen ist Erfindungsgemäß wird zum wirkungsvolleren Absichern der Absperrtafel eine optisch wirksame Detektoreinrichtung vorgesehen, die einen vor der Absperrtafel liegenden Streckenabschnitt abtastet und Abstand und Geschwindigkeit eines darauf nähernden Fahrzeugs in vorgegebenen Intervallen misst. Bei der Auswertung der Messwerte wird die Beschleunigung des Fahrzeugs ermittelt und mittels einer logischen Verknüpfung dieser Größen eine Fuzzy-Logik angesteuert, die einen Wahrscheinlichkeitswert dafür ermittelt, dass das sich nähernde Fahrzeug auf die Baustelle auffahren wird. Eine Warneinrichtung wird durch einen kritischen Wert für die Auffahrwahrscheinlichkeit ausgelöst und gibt an den Baustellenbereich und/oder das sich nähernde Fahrzeug ein Alarmsignal ab. Zukünftige Fahrerassistenzsysteme werden in der Lage sein, mittels einer erweiterten Sensorik sowie einer erweiterten Funktionalität das Fahrzeug automatisch bis in den Stillstand abzubremsen, sowie ein in den Stillstand gebremstes Fahrzeug wieder anzufahren. Hierzu sind weitere Funktionen der Abstands- und Geschwindigkeitsregelung notwendig.

Kern der vorliegenden Erfindung ist es, ein Verfahren und eine Vorrichtung anzugeben, die im Stillstand eines Fahrzeugs, das mit einem adaptiven Abstands- und Geschwindigkeitsregler ausgestattet ist, das Zurückrollen eines vorherigen Fahrzeugs zu erkennen und den Fahrer des eigenen sowie des voraus befindlichen Fahrzeugs zu warnen. Erfindungsgemäß wird dieses durch die Merkmale der unabhängigen Ansprüche gelöst. Vorteilhafte Weiterbildungen und Ausgestaltungen ergeben sich aus den Unteransprüchen.

Vorteilhaft ist, dass die adaptive Abstands- und Geschwindigkeitsregelung den Abstand des ersten Fahrzeugs zum zweiten Fahrzeug, deren Relativgeschwindigkeit, deren Relativbeschleunigung oder den lateralen Versatz beider Fahrzeuge oder eine Kombination hieraus ermittelt. Der adaptive Abstands- und Geschwindigkeitsregler kann beispielsweise als Radarsensor, Lasersensor, Ultraschallsensor oder Videosensor oder als eine Kombination hieraus ausgebildet sein.

Weiterhin ist es vorteilhaft, dass die Absolutgeschwindigkeit des ersten Fahrzeugs mittels eines Geschwindigkeitssensors ermittelt wird. Auf Grund der ermittelten Eigengeschwindigkeit des ersten Fahrzeugs sowie der Relativgeschwindigkeit, der Relativbeschleunigung sowie dem Abstand des ersten zum zweiten Fahrzeug ist es möglich, sowohl die Absolutgeschwindigkeit des zweiten Fahrzeugs zu bestimmen, als auch die Bewegungsrichtung des zweiten Fahrzeugs zu ermitteln.

Vorteilhafter Weise ist der Mindestabstand, bei dessen Unterschreitung die Warnung ausgegeben wird, durch den Fahrer des ersten Fahrzeugs veränderbar. Hierzu können beispielsweise fahrerbedienbare Betätigungselemente vorgesehen sein, mittels denen dieser Mindestabstand einstellbar ist.

Weiterhin ist es vorteilhaft, dass die ausgegebene Warnung eine akustische und/oder optische Warnung ist.

Weiterhin ist es vorteilhaft, dass die Warnung an den Fahrer des ersten Fahrzeugs ausgegeben wird. Weiterhin ist es vorteilhaft, dass die Warnung an den Fahrer des zweiten Fahrzeugs und/oder das weitere Fahrzeugumfeld ausgegeben wird. Beispielsweise kann die akustische Warnung ein Summer im Innenraum des ersten Fahrzeugs sein, der den Fahrer des ersten Fahrzeugs informiert. Ebenfalls ist es möglich, als akustische Warnung die Fahrzeughupe anzusteuern, mittels der auch das Fahrzeugumfeld sowie der Fahrer des vorausfahrenden zweiten Fahrzeugs informierbar ist. Als optische Warnung kann beispielsweise eine Kontrollleuchte oder eine Anzeige in einem Fahrzeugdisplay vorgesehen sein, mittels denen der Fahrer des ersten Fahrzeugs informiert wird. Weiterhin ist es möglich, als optische Warnung die Frontbeleuchtung des Fahrzeugs anzusteuern, insbesondere in Form einer Lichthupe, mittels denen Lichtsignale an das vorausfahrende zweite Fahrzeug ausgebbar sind, so dass der Fahrer des zweiten Fahrzeugs auf diese Weise optisch informierbar ist.

Weiterhin ist es vorteilhaft, dass das Mittel zur Erkennung eines Fahrzeugstillstands des ersten Fahrzeugs ein Geschwindigkeitssensor ist.

Weiterhin ist es vorteilhaft, dass das Mittel zur Ermittlung des Abstands und der Relativgeschwindigkeit des zweiten Fahrzeugs eine adaptive Abstands- und Geschwindigkeitsregelung ist, mittels der der Abstand des ersten Fahrzeugs zum zweiten Fahrzeug, deren Relativgeschwindigkeit, deren Relativbeschleunigung oder der laterale Versatz beider Fahrzeuge zueinander oder eine Kombination hieraus ermittelbar ist. Hierzu können Radarsensoren, Lasersensoren, Ultraschallsensoren, Videosensoren oder eine Kombination aus den beschriebenen Sensorarten verwendet werden. Weiterhin ist es auch nicht zwingend, das erfindungsgemäße Verfahren im Rahmen einer adaptiven Abstands- und Geschwindigkeitsregelung umzusetzen, sondern kann auch als eigenständige Funktion im Fahrzeug vorgesehen sein oder als Teil eines weiteren Systems, beispielsweise als Funktion einer ultraschall- oder radarbasierten Einparkhilfe realisiert sein.

Weiterhin ist es vorteilhaft, dass fahrerbedienbare Einstellmittel vorgesehen sind, mittels denen der Mindestabstand durch den Fahrer des ersten Fahrzeugs veränderbar ist, so dass der Mindestabstand, bei dessen Unterschreitung die Warnung ausgegeben wird, durch den Fahrer bestimmt werden kann.

Vorteilhafter Weise ist das Mittel zur Ausgabe der Warnung eine akustische und/oder optische Warneinrichtung.

Weiterhin ist es vorteilhaft, dass die Warneinrichtung die Warnung an den Fahrer des ersten Fahrzeugs und/oder an den Fahrer des zweiten Fahrzeugs und/oder das weitere Fahrzeugumfeld ausgibt.

Von besonderer Bedeutung ist die Realisierung des erfindungsgemäßen Verfahrens in der Form eines Steuerelements, das für ein Steuergerät einer adaptiven Abstands- bzw. Geschwindigkeitsregelung eines Kraftfahrzeugs vorgesehen ist. Dabei ist auf dem Steuerelement ein Programm gespeichert, das auf einem Rechengerät, insbesondere auf einem Mikroprozessor oder Signalprozessor, ablauffähig und zur Ausführung des erfindungsgemäßen Verfahrens geeignet ist. In diesem Fall wird also die Erfindung durch ein auf dem Steuerelement abgespeichertes Programm realisiert, so dass dieses mit dem Programm versehene Steuerelement in gleicher Weise die Erfindung darstellt, wie das Verfahren, zu dessen Ausführung das Programm geeignet ist. Als Steuerelement kann insbesondere ein elektrisches Speichermedium zur Anwendung kommen, beispielsweise ein ReadOnlyMemory.

Weitere Merkmale, Anwendungsmöglichkeiten und Vorteile der Erfindung ergeben sich aus der nachfolgenden Beschreibung von Ausführungsbeispielen der Erfindung, die in den Figuren der Zeichnung dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung bzw. Darstellung in der Beschreibung bzw. in den Zeichnungen.

### Zeichnungen

Nachfolgend werden Ausführungsbeispiele der Erfindung anhand von Zeichnungen erläutert. Es zeigen
- Figur 1: ein schematisches Blockschaltbild einer Ausführungsform der erfindungsgemäßen Vorrichtung und
- Figur 2: ein Ablaufdiagramm einer Ausführungsform des erfindungsgemäßen Verfahrens.

### Beschreibung von Ausführungsbeispielen

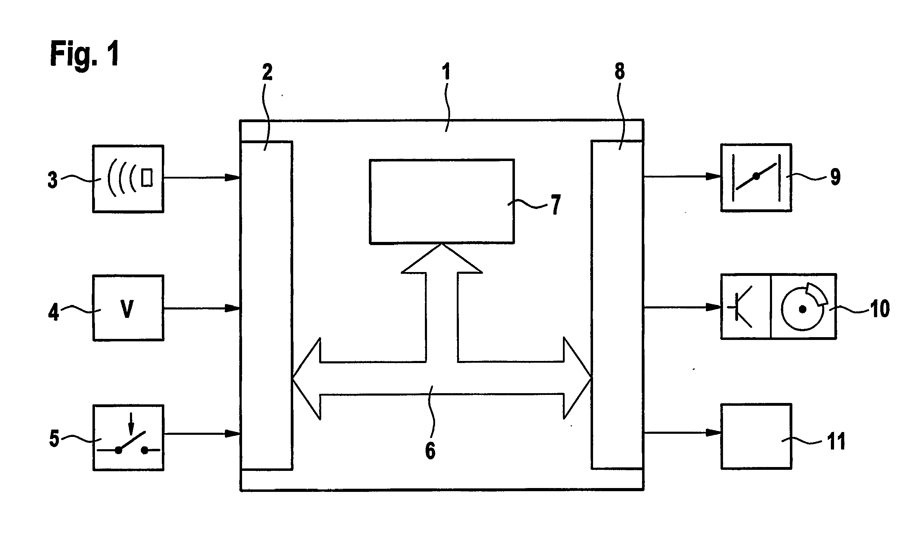

In Figur 1 ist ein Abstands- und Geschwindigkeitsregler 1 dargestellt, der eine Eingangsschaltung 2 aufweist. Mittels der Eingangsschaltung 2 werden dem Abstands- und Geschwindigkeitsregler 1 Eingangssignale von weiteren Vorrichtungen 3, 4, 5 zugeführt. Vorrichtung 3 ist beispielsweise ein Radarsensor, der Radarstrahlung aussendet und an Objekten reflektierte Teilwellen empfängt und auswertet. Mittels des Radarsensors 3 ist es möglich, zu erkennen, ob im Sensorerfassungsbereich des Radarsensors 3 ein Objekt vorhanden ist, welchen Abstand zum Sensor dieses Objekt aufweist, sowie welche Relativgeschwindigkeit zwischen dem Objekt und dem Fahrzeug besteht. Alternativ kann anstatt eines Radarsensors ebenfalls ein Lasersensor, auch Lidarsensor genannt, verwendet werden, ein Ultraschallsensor oder eine Videokamera mit entsprechender Bildauswertung eingesetzt werden. Dieser Radarsensor 3 oder eine beschriebene Alternative führt der Eingangsschaltung 2 Messdaten zu, wie beispielsweise den Abstand d des Objekts zum eigenen Fahrzeug, die Relativgeschwindigkeit Vrel des Objekts in Bezug auf das eigene Fahrzeug, den Azimutwinkel, unter dem das vorausfahrende Objekt detektiert wurde, mit dem sich beispielsweise der laterale Versatz des vorherfahrenden Fahrzeugs berechnen lässt. Ebenfalls ist es möglich, anstatt des Radarsensors 3 mehrer Radarsensoren einzusetzen, wobei jeder der Radarsensoren seine Messsignale an die Eingangsschaltung 2 ausgibt. Ebenfalls ist es möglich, mehrere unterschiedliche Sensoren zu verwenden, beispielsweise Radarsensoren in Verbindung mit Lasersensoren, Radarsensoren in Verbindung mit einer Videokamera, Lasersensoren in Verbindung mit einer Videokamera oder eine andere, beliebige Kombination der erwähnten Sensortypen. Jeder Sensor gibt einzeln seine Messwerte an die Eingangsschaltung 2 des Abstands- und Geschwindigkeitsreglers 1 aus, um sie der Auswertung zuzuführen. Weiterhin wird der Eingansschaltung 2 des Abstands- und Geschwindigkeitsreglers 1 ein Geschwindigkeitssignal V zugeführt, das von einer Geschwindigkeitsermittlungseinrichtung 4 stammt. Diese Geschwindigkeitsermittlungseinrichtung 4 kann beispielsweise als Geschwindigkeitssensor ausgeführt sein, oder es kann das Geschwindigkeitssignal eines Antiblockiersystems, das kontinuierlich die Raddrehzahlen misst, verwendet werden oder eine elektronische Fahrdynamikregelung zur Ermittlung der Absolutgeschwindigkeit des eigenen Fahrzeugs herangezogen werden. Dieses Geschwindigkeitssignal wird der Eingangsschaltung 2 des Abstands- und Geschwindigkeitsreglers zugeführt. Ebenso ist ein fahrerbetätigbares Bedienelement 5 vorgesehen, mittels dem der Fahrer des Fahrzeugs die adaptive Abstands- und Geschwindigkeitsregelung in Betrieb nehmen kann, ausschalten kann sowie deren Einstellungen verändern kann. Beispielsweise ist es dem Fahrer möglich, eine Zeitlücke einzustellen, in der das eigene Fahrzeug dem vorherfahrenden Fahrzeug folgen soll oder einen Mindestabstand dmin vorzugeben, ab dem eine Warnung ausgegeben werden soll. Diese Bediensignale werden ebenfalls der Eingangsschaltung 2 des adaptiven Abstands- und Geschwindigkeitsreglers 1 zugeführt. Die Eingangsschaltung 2 gibt diese Signale mittels einer Datenaustauschvorrichtung 6, die vorteilhafter Weise als Bus-System ausgeführt sein kann an eine Berechnungseinrichtung 7 weiter. Die Berechnungseinrichtung 7 kann vorteilhafter Weise als Mikroprozessor oder Signalprozessor ausgeführt sein und berechnet in Abhängigkeit der dem Abstands- und Geschwindigkeitsregler 1 zugeführten Größen Stellsignale, mittels denen Motor und Bremsen des Fahrzeugs ansteuerbar sind. Insbesondere läuft auf der Berechnungseinrichtung 7 auch das erfindungsgemäße Verfahren ab, das feststellt, ob die Bedingungen für die Ausgabe einer Warnung vorliegen oder nicht. Die von der Berechnungseinrichtung 7 ermittelten Stellsignale sowie Warnsignale werden mittels der Datenaustauschvorrichtung 6 einer Ausgangsschaltung 8 zugeführt, die die Ausgangssignale des Abstands- und Geschwindigkeitsreglers 1 an nachgeordnete Verarbeitungseinrichtungen 9, 10, 11 weiterleitet. Beispielsweise ist vorgesehen, ein Beschleunigungsanforderungssignal an ein leistungsbestimmendes Stellelement 9 einer Antriebsmaschine auszugeben. Stellt die Abstands- und Geschwindigkeitsregelung fest, dass das geregelte Fahrzeug beschleunigt werden soll, so wird dieses Beschleunigungssignal an ein leistungsbestimmendes Stellelement 9 ausgegeben, das beispielsweise als elektrisch steuerbare Drosselklappe, als eine Kraftstoffmengenzumesseinrichtung eines Speichereinspritzsystems, als eine Regelstange einer Kraftstoffeinspritzpumpe oder vergleichbare Einrichtungen ausgeführt sein kann. Stellt demgegenüber die Abstands- und Geschwindigkeitsregelung 1 fest, dass das eigene Fahrzeug abgebremst werden soll, so wird ein Stellsignal an die Verzögerungseinrichtungen 10 des Fahrzeugs ausgegeben. Die Verzögerungseinrichtungen 10 können beispielsweise als elektrisch ansteuerbare Bremseinrichtungen ausgeführt sein, die aus dem elektrischen Verzögerungsanforderungssignal eine Bremskraft oder einen Bremsdruck erzeugt oder umsetzt. Die Ausgangsschaltung 8 gibt ebenfalls ein von der Berechnungseinrichtung 7 erzeugtes Warnsignal an eine Warnvorrichtung 11 aus. Die Warnvorrichtung 11 kann beispielsweise eine Kontrollleuchte im Armaturenbrett des Fahrzeugs sein oder eine Anzeige in einem programmierbaren Display der Armaturentafel des Fahrzeugs sein, die den Fahrer darüber informiert, dass sich das eigene Fahrzeug im Stillstand befindet und sich das vorausfahrende Fahrzeug in einem zurückrollenden Zustand befindet, wodurch ein Aufprall des vorausfahrenden Fahrzeugs auf das eigene Fahrzeug möglich ist. Die Warneinrichtung 11 kann alternativ oder zusätzlich die Fahrzeughupe und/oder die Scheinwerfer des Fahrzeugs ansteuern. Durch eine Betätigung des Fahrzeughorns ist auch der Fahrer des vorherfahrenden Fahrzeugs über das Zurückrollen seines Fahrzeugs und die mögliche Kollision informierbar. Ebenso ist mittels einer Lichthupe, also dem abwechselnden Ein- und Ausschalten des Abblendlichtes oder der Scheinwerfer des Fahrzeugs möglich, den Fahrer des vorausfahrenden Fahrzeugs über das Zurückrollen und die mögliche Kollision zu informieren.

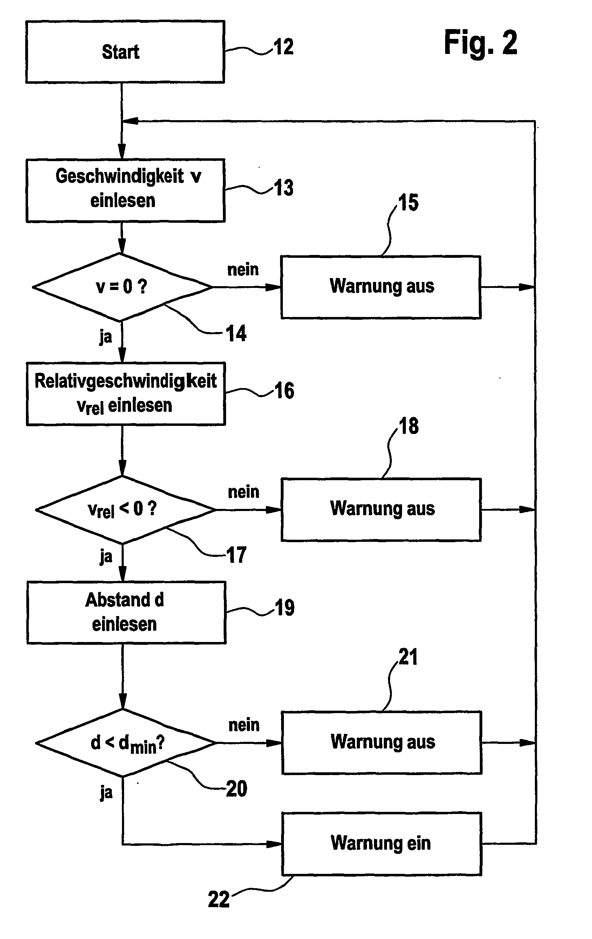

In Figur 2 ist ein Ablaufdiagramm einer Ausführungsform des erfindungsgemäßen Verfahrens aufgezeigt, das bevorzugt in der Berechnungseinrichtung 7 des adaptiven Abstands- und Geschwindigkeitsreglers 1 abläuft. Das Verfahren beginnt in Block 12, was beispielsweise durch die Inbetriebnahme des Abstands- und Geschwindigkeitsreglers 1 durch das fahrerbetätigbare Bedienelement 5 ausgelöst wird. Ebenfalls ist es möglich, dieses Verfahren in Block 12 durch das Einschalten der Zündung des Fahrzeugs in Betrieb zu nehmen. Danach wird in Block 13 die Geschwindigkeit V eingelesen, die mittels der Geschwindigkeitsermittlungseinrichtung 4 ermittelt wurde und der Reglereinheit 1 zugeführt wurde. In Block 14 wird abgefragt, ob die Geschwindigkeit V gleich Null ist, d.h. ob sich das eigene Fahrzeug im Stillstand befindet. Ist dies nicht der Fall, so verzweigt Block 14 nach "nein" und in Block 15 wird die Warnung ausgeschaltet. Ist die Warnung bereits vorher ausgeschaltet gewesen, so ist Block 15 ohne Auswirkung. Danach springt das Verfahren wieder zurück vor Block 13 und die Geschwindigkeit V wird erneut eingelesen. Ergibt die Abfrage in Block 14, dass die Geschwindigkeit V des Fahrzeugs gleich Null ist, also sich das Fahrzeug im Stillstand befindet, so verzweigt das Diagramm nach Block 16, in dem die Relativgeschwindigkeit Vrel eingelesen wird. Die Relativgeschwindigkeit Vrel wird mittels des Umfeldsensors 3, der den Abstand und die Relativgeschwindigkeit des vorherfahrenden Fahrzeugs messen kann, dem Regler 1 zugeführt. Im folgenden Schritt 17 wird abgefragt, ob die Relativgeschwindigkeit Vrel kleiner Null ist. Ist dies nicht der Fall, d.h. das vorausfahrende Fahrzeug besitzt eine Relativgeschwindigkeit gleich Null, ist also ebenfalls im Stillstand, oder Vrel größer Null, d.h. das vorausfahrende Fahrzeug bewegt sich nach vorne, so verzweigt Block 17 nach "nein" und schaltet in Block 18 die Warnung aus und verzweigt zurück zu Block 13. Ist die Warnung bereits vor Block 18 deaktiviert gewesen, so ist Block 18 ohne Auswirkung. Wird in Block 17 festgestellt, dass die Relativgeschwindigkeit Vrel des vorherfahrenden Fahrzeuges zum eigenen Fahrzeug negativ ist, also das vorausbefindliche Fahrzeug sich rückwärts bewegt, so verzweigt Block 17 nach "ja" und wird in Block 19 fortgesetzt. In Block 19 wird der Abstand d eingelesen. Der Abstand d wird mittels des Umfeldsensors 3, der beispielsweise als Radarsensor ausgeprägt sein kann, ermittelt und der Reglereinrichtung 1 zugeführt und der Auswertung in der Berechnungsrichtung 7 bereitgestellt. Im folgenden Block 20 wird überprüft, ob der gemessene Abstand d kleiner ist, als ein vom Fahrer mittels des Bedienelements 5 einstellbarer Mindestabstand dmin. Ergibt Block 20, dass der momentane Abstand d zwischen dem ersten und dem zweiten Fahrzeug größer oder gleich dem Mindestabstand dmin ist, so verzweigt Block 20 nach "nein" und schaltet in Block 21 die Warnung aus. Ist die Warnung bereits deaktiviert gewesen, so ist Block 21 ohne Auswirkung und verzweigt danach wieder zu Block 13. Ergibt Block 20, dass der Abstand d des ersten zum zweiten Fahrzeug geringer ist, als der vom Fahrer vorgegebene Mindestabstand dmin, so verzweigt Block 20 nach "ja" und es wird in Block 22 eine Warnung aktiviert. Diese Warnung kann beispielsweise eine Kontrollleuchte, ein Display, die Fahrzeughupe oder eine Lichthupe des Fahrzeugs sein. Nach dem Aktivierten der Warnung verzweigt das Diagramm zu Block 13 und wird abermals durchlaufen, wobei die Warnung so lange aktiviert bleibt, bis eine der Bedingungen nach Block 14, 17 oder 20 eine Deaktivierung der Warnung in den Blöcken 15, 18 oder 21 erfolgt.

## Patentansprüche

1. Verfahren zum Ausgeben einer Warnung an einem ersten, mit einer adaptiven Abstands- und Geschwindigkeitsregelung (1) ausgestatteten Kraftfahrzeug, **dadurch gekennzeichnet, dass** im Fahrzeugstillstand des ersten Fahrzeugs der mittels einer Geschwindigkeitsermittlungseinrichtung (4) erkannt wird, ein Zurückrollen eines zweiten vorausfahrenden Fahrzeugs, das sich unmittelbar vor dem ersten Fahrzeug befindet, erkannt wird indem eine Relativgeschwindigkeit des zweiten, vorausfahrenden Fahrzeugs bezüglich des ersten, mit der adaptiven Abstands- und Geschwindigkeitsregelung (1) ausgestatteten Fahrzeugs mittels des Umfeldsensors (3) ausgewertet wird und die Relativgeschwindigkeit ein Zurückrollen des zweiten, vorausbefindlichen Fahrzeugs in Richtung des ersten, Fahrzeugs ergibt und dass bei Unterschreitung eines Mindestabstands (dmin) zwischen dem ersten und dem zweiten Fahrzeug eine Warnung (11) an den Fahrer des vorausfahrenden zweiten Fahrzeugs ausgegeben wird, indem das Fahrzeughorn und die Lichthupe an dem ersten, stillstehenden Fahrzeug automatisch betätigt werden.

2. Verfahren nach Anspruch 1, **dadurch gekennzeichnet, dass** die adaptive Abstands- und Geschwindigkeitsregelung (1) den Abstand des ersten Fahrzeugs zum zweiten Fahrzeug (d), deren Relativgeschwindigkeit (vrel), deren Relativbeschleunigung oder den lateralen Versatz beider Fahrzeuge oder eine Kombination hieraus ermittelt

3. Verfahren nach einem der vorhergehenden Ansprüche, **dadurch gekennzeichnet, dass** der Mindestabstand (dmin) durch den Fahrer des ersten Fahrzeugs veränderbar ist.

4. Verfahren nach einem der vorhergehenden Ansprüche, **dadurch gekennzeichnet, dass** die Warnung (22) an den Fahrer des ersten Fahrzeugs ausgegeben wird.

5. Vorrichtung zur Erzeugung einer Warnung (11) an einem ersten, mit einer adaptiven Abstands- und Geschwindigkeitsregelung (1) ausgestatteten Kraftfahrzeug, **dadurch gekennzeichnet, dass** am ersten, Fahrzeug ein Geschwindigkeitssensor (4) zur Erkennung eines Fahrzeugstillstands (4) des ersten Fahrzeugs vorhanden ist, dass ein Umfeldsensor (3) zur Ermittlung des Abstands und der Relativgeschwindigkeit (3) eines zweiten, vorherfahrenden Fahrzeugs, das sich unmittelbar vor dem ersten Fahrzeug befindet vorhanden ist, mittels dem während der Erkennung eines Fahrzeugstillstands des ersten Fahrzeugs ein Zurückrollen des zweiten vorherfahrenden Fahrzeugs erkannt wird und dass Mittel zur Ausgabe einer Warnung (11) vorhanden sind, die bei Unterschreitung eines Mindestabstands (dmin) zwischen dem ersten und dem zweiten Fahrzeug aktiviert werden, indem die Warneinrichtung (11) die Warnung an den Fahrer des zweiten vorherfahrenden Fahrzeugs ausgibt indem das Fahrzeughorn und die Lichthupe an dem ersten, stillstehenden Fahrzeug automatisch betätigt werden.

6. Vorrichtung nach einem der Ansprüche 5, **dadurch gekennzeichnet, dass** fahrerbedienbare Einstellmittel (5) vorgesehen sind, mittels denen der Mindestabstand (dmin) durch den Fahrer des ersten Fahrzeugs veränderbar ist

## Claims

1. Method for emitting a warning on a first motor vehicle, equipped with an adaptive distance and speed control (1), **characterized in that**, when the first vehicle is at a standstill, which is detected by means of a speed determining device (4), rolling back of a second vehicle, travelling in front, which is located directly in front of the first vehicle, is detected by a relative speed of the second vehicle, travelling in front, with respect to the first vehicle, equipped with the adaptive distance and speed control (1), being evaluated by means of the environment sensor (3) and the relative speed indicating rolling back of the second vehicle, located in front, in the direction of the first vehicle and **in that**, if the distance between the first vehicle and the second vehicle goes below a minimum distance (dmin), a warning (11) is emitted to the driver of the second vehicle, travelling in front, by the first, stationary vehicle being automatically made to sound its horn and flash its lights.

2. Method according to Claim 1, **characterized in that** the adaptive distance and speed control (1) determines the distance of the first vehicle from the second vehicle (d), their relative speed (vrel), their relative acceleration or the lateral offset of the two vehicles or a combination thereof.

3. Method according to one of the preceding claims, **characterized in that** the minimum distance (dmin) can be changed by the driver of the first vehicle.

4. Method according to one of the preceding claims, **characterized in that** the warning (22) is emitted to the driver of the first vehicle.

5. Device for producing a warning (11) on a first vehicle, equipped with an adaptive distance and speed control (1), **characterized in that** on the first vehicle there is a speed sensor (4) for detecting a standstill (4) of the first vehicle, **in that** there is an environment sensor (3) for determining the distance and the relative speed (3) of a second vehicle, travelling in front, which is located directly in front of the first vehicle, by means of which sensor rolling back of the second vehicle, travelling in front, is detected during the detection of a standstill of the first vehicle and **in that** there are means for emitting a warning (11), which are activated if the distance between the first vehicle and the second vehicle goes below a minimum distance (dmin), **in that** the warning device (11) emits the warning to the driver of the second vehicle, travelling in front, by the first, stationary vehicle being automatically made to sound its horn and flash its lights.

6. Device according to claim 5, **characterized in that** driver-operable setting means (5) are provided, by means of which the minimum distance (dmin) can be changed by the driver of the first vehicle.

## Revendications

1. Procédé pour émettre une alerte sur un premier véhicule équipé d'une régulation adaptative de distance et de vitesse (1),
**caractérisé en ce qu'**
à l'arrêt du premier véhicule détecté à l'aide d'une installation de détermination de vitesse (4), on détecte le recul d'un second véhicule qui précède et se trouve directement devant le premier véhicule en exploitant la vitesse relative du second véhicule qui précède par rapport au premier véhicule équipé de la régulation adaptative de distance et de vitesse (1), à l'aide d'un capteur de champ environnant (3) et
on obtient la vitesse relative du véhicule qui précède et recule en direction du premier véhicule et
en cas de dépassement d'une distance minimale (dmin) entre le premier et le second véhicule, une alerte (11) est émise pour le conducteur du second véhicule qui précède par l'avertisseur sonore et lumineux du premier véhicule à l'arrêt actionné automatiquement.

2. Procédé selon la revendication 1,
**caractérisé en ce que**
la régulation adaptative de distance et de vitesse (1) détermine la distance du premier véhicule par rapport au second véhicule (d), la vitesse relative (vrel), l'accélération relative et le décalage latéral des deux véhicules ou une combinaison de ces éléments.

3. Procédé selon l'une des revendications précédentes,
**caractérisé en ce qu'**
le conducteur du premier véhicule modifie la distance minimale (dmin).

4. Procédé selon l'une des revendications précédentes,
**caractérisé en ce que**
l'alerte (22) est envoyée au conducteur du premier véhicule.

5. Dispositif pour générer une alerte (11) sur un premier véhicule équipé d'une régulation adaptative de distance et de vitesse (1),
**caractérisé en ce que**
le premier véhicule comporte un capteur de vitesse (4) pour détecter l'état d'arrêt (4) du premier véhicule, un capteur de champ environnant (3) pour déterminer la distance et la vitesse relative (3) d'un second véhicule qui précède, et directement devant le premier véhicule, à l'aide duquel, pendant la détection de l'arrêt du premier véhicule, on reconnaît le recul du second véhicule qui précède et
des moyens pour émettre l'alerte (11) qui sont activé en cas de dépassement vers le bas d'une distance minimale (dmin) entre le premier et le second véhicule, **en ce que** l'installation d'avertissement (11) émet l'alerte pour le conducteur du second véhicule qui précède, en actionnant automatiquement l'avertisseur sonore et l'avertisseur lumineux du premier véhicule à l'arrêt.

6. Dispositif selon la revendication 5,
**caractérisé par**
des moyens de réglage (5) que peut commander le conducteur et à l'aide desquels il peut modifier la distance minimale (dmin) du premier véhicule.
